(19) Europäisches Patentamt
European Patent Office
Office européen des brevets

(11) **EP 4 492 835 A1**

(12) **EUROPEAN PATENT APPLICATION**
published in accordance with Art. 153(4) EPC

(43) Date of publication:
**15.01.2025 Bulletin 2025/03**

(21) Application number: **23803896.2**

(22) Date of filing: **12.05.2023**

(51) International Patent Classification (IPC):
*H04W 4/80* (2018.01)          *H04W 8/00* (2009.01)
*H04W 84/18* (2009.01)          *G01S 5/02* (2010.01)

(52) Cooperative Patent Classification (CPC):
**G01S 5/02; H04W 4/80; H04W 8/00; H04W 84/18**

(86) International application number:
**PCT/KR2023/006511**

(87) International publication number:
**WO 2023/219473 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022 KR 20220058521**

(71) Applicant: **Samsung Electronics Co., Ltd
Suwon-si, Gyeonggi-do 16677 (KR)**

(72) Inventors:
• **OH, Hyunseob**
**Suwon-si Gyeonggi-do 16677 (KR)**
• **SEO, Seungbeom**
**Suwon-si Gyeonggi-do 16677 (KR)**
• **JUN, Haeyoung**
**Suwon-si Gyeonggi-do 16677 (KR)**
• **SEO, Jinwook**
**Suwon-si Gyeonggi-do 16677 (KR)**

(74) Representative: **Nederlandsch Octrooibureau
P.O. Box 29720
2502 LS The Hague (NL)**

(54) **METHOD AND DEVICE FOR CLUSTER CONFIGURATION AND ROUND ALLOCATION FOR UWB COMMUNICATION**

(57) An operation method of an electronic device according to various embodiments of the present disclosure may comprise the steps of: identifying two-way ranging (TWR) values for multiple anchors; configuring a first cluster including a first initiator anchor and first responder anchors on the basis of the TWR values; configuring a second cluster including a second initiator anchor and second responder anchors on the basis of the TWR values; and allocating a ranging round to each of the first cluster and the second cluster.

FIG. 8

## Description

[Technical Field]

The disclosure relates to UWB communication and, more specifically, to a method and device for cluster configuration and round allocation optimization for UWB communication.

[Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB).

[Detailed Description of the Invention]

[Technical Problem]

The disclosure provides a method and device for anchor role allocation and cluster configuration for UWB communications.

The disclosure provides methods and devices for spatial reuse of time resources.

[Technical Solution]

A method for operating an electronic device, according to various embodiments of the disclosure, may comprise identifying two-way ranging (TWR) values for a plurality of anchors, configuring a first cluster including a first initiator anchor and first responder anchors based on the TWR values, configuring a second cluster including a second initiator anchor and second responder anchors based on the TWR values, and allocating a ranging round to each of the first cluster and the second cluster.

An electronic device according to various embodiments of the disclosure comprises a transceiver and a processor. The processor may identify two-way ranging (TWR) values for a plurality of anchors, configure a first cluster including a first initiator anchor and first responder anchors based on the TWR values, configure a second cluster including a second initiator anchor and second responder anchors based on the TWR values, and allocate a ranging round to each of the first cluster and the second cluster.

[Advantageous Effects]

Through the embodiment of the disclosure, it is possible to allocate an optimal anchor role and configure an optimal cluster during UWB communication.

Through the embodiments of the disclosure, it is possible to increase the efficiency of resource use by spatially reuse the same time resource when allocating a round to a configured cluster.

[Brief Description of the Drawings]

FIG. 1 illustrates an example architecture of a UWB device according to an embodiment of the disclosure;

FIG. 2 illustrates an example configuration of a framework of a UWB device according to an embodiment of the disclosure;

FIG. 3 illustrates a method for performing communication by a plurality of electronic devices according to an embodiment of the disclosure;

FIG. 4 illustrates a structure of a UWB MAC frame according to an embodiment of the disclosure;

FIGS. 5A and 5B illustrate a structure of a UWB PHY packet according to an embodiment of the disclosure;

FIG. 6 illustrates an example of a structure of a ranging block and round used for UWB ranging according to an embodiment of the disclosure;

FIG. 7A illustrates schematic operations of a DL-TDoA procedure according to an embodiment of the disclosure;

FIG. 7B illustrates an example message exchange operation of a DL-TDoA procedure according to an embodiment of the disclosure;

FIG. 8 is a view schematically illustrating a method for configuring a multi-cluster chain for time synchronization according to an embodiment of the disclosure;

FIG. 9A illustrates an example of a cluster configuration according to an embodiment of the disclosure;

FIG. 9B illustrates another example of a cluster configuration according to an embodiment of the disclosure;

FIG. 10 illustrates an example graph defining a connection between an initiator anchor and a responder anchor according to an embodiment of the disclosure;

FIG. 11 illustrates an example of allocating a round to a configured cluster according to an embodiment of the disclosure;

FIG. 12 illustrates an example sequence in which an optimization algorithm is performed in a time domain according to an embodiment of the disclosure;

FIG. 13 illustrates an example process in which a TWR is performed between anchors installed at designated positions according to an embodiment of the disclosure;

FIG. 14 illustrates an example of determining whether an NLOS context occurs between anchors according to an embodiment of the disclosure;

FIG. 15 illustrates an example of a matrix indicating whether anchors belong to the same cluster according to an embodiment of the disclosure;

FIG. 16 illustrates an example of configuring a cluster so that the sum operation of NLOS weight factors between anchors is minimized according to an embodiment of the disclosure;

FIG. 17 illustrates an example of allocating a round to each of clusters according to an embodiment of the disclosure;

FIG. 18 illustrates an example of a matrix indicating a round allocated to each of clusters according to an embodiment of the disclosure;

FIG. 19 is a block diagram illustrating an electronic device according to an embodiment of the disclosure; and

FIG. 20 is a flowchart illustrating an operation method of an electronic device according to an embodiment of the disclosure.

[Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

According to the definitions by the Federal Communications Commission (FCC), UWB may refer to a wireless communication technology that uses a bandwidth of 500 MHz or more or a bandwidth corresponding to a center frequency of 20% or more. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controllee information and UWB session data required for a UWB session.

"Controller" may be a ranging device that defines and controls ranging control messages (RCM) (or control messages).

"Controllee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controllee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. In this disclosure, the UWB session key may be a UWB ranging session key (URSK), and may be abbreviated as a session key.

"UWB subsystem (UWBS)" may be a hardware component implementing the UWB PHY and MAC layers specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

"UWB message" may be a message including a payload IE transmitted by the UWB device (e.g., ERDEV).

The "ranging message" may be a message transmitted by a UWB device (e.g., ERDEV) in a UWB ranging procedure. For example, the ranging message may be a message, such as a ranging initiation message (RIM), a ranging response message (RRM), a ranging final message (RFM), or a measurement report message (MRM), **transmitted by a UWB device (e.g., ERDEV)** in a specific phase of the ranging round. A ranging message may include one or more UWB messages. If necessary, a plurality of ranging messages may be merged into one message. For example, in the case of non-deferred DS-TWR ranging, RFM and MRM may be merged into one message in a ranging final phase.

"Payload IE" may be referred to as a payload information element and may be included in the MAC payload of the UWB MAC frame defined in IEEE 802.15.4/4z. The MAC payload may include a plurality of payload IEs.

"Data transfer IE" may be an additional payload IE for transmitting application data. Application data may be data transferred from a framework or application above the UWB MAC Layer. The data transfer IE may be used in the procedure for ranging between the initiator and the responder. In this case, the ranging message may include at least one or both of the payload IE for ranging and the data transfer IE for application data transfer. For example, the data transfer IE may be included and transmitted as part of the payload IE of the MAC payload of a ranging initiation message (RIM) for ranging, a ranging response message (RRM), a ranging final message (RFM), a measurement report message (MRM) and ranging result report message (RRRM). The data transfer IE may be transferred to the payload IE of the MAC payload of the DTM. For example, the data transfer IE may be transferred, together with the DTM payload IE, while being attached to the MAC payload portion of the poll DTM, response DTM, and final DTM.

"UWB channel" may be one of candidate UWB channels allocated for UWB communication. Candidate UWB channels allocated for UWB communication may be channels allocated for UWB communication defined in IEEE 802.15.4/4z. The UWB channel may be used for UWB ranging and/or transaction. For example, the UWB channel may be used for transmission/reception of a ranging frame RFRAME and/or transmission/reception of a data frame.

"Narrow band (NB) channel" may be a channel having a narrower bandwidth than the UWB channel. In an embodiment, the NB channel may be a subchannel of one of the candidate UWB channels allocated for UWB communication. Candidate UWB channels allocated for UWB communication may be channels allocated for UWB communication defined in IEEE 802.15.4/4z. The NB channel may be used for advertising, device discovery, and/or connection setup for additional parameter negotiation/authentication. For example, the NB channel may be used for transmission and reception of an advertisement message, an additional advertising message, a connection request message, and/or a connection confirmation message.

"One-way ranging (OWR)" may be a ranging scheme using a time difference of arrival (TDoA) localization method. The TDoA method corresponds to a method for locating a mobile device (tag device) based on a relative arrival time of a single message or multiple messages. For a description of OWR (TDoA), reference may be made to the description of IEEE 802.15.4z. As an example of the OWR scheme, an uplink (UL)-TDoA scheme may be included.

"Two-way ranging (TWR)" may be a ranging scheme capable of estimating a relative distance between two devices by measuring time of flight (ToF) through the exchange of ranging messages between the two devices. The TWR scheme may be one of double-sided two-way ranging (DS-TWR) and single-sided two-way ranging (SS-TWR). SS-TWR may be a procedure for performing ranging through one round-trip time measurement. DS-TWR may be a procedure for performing ranging through two round-trip time measurements. For a description of SS-TWR and DS-TWR, reference may be made to the description of IEEE 802.15.4z.

"DL-TDoA" may be called Downlink Time Difference of Arrival (DL-TDoA), reverse TDoA, and its default operation may be for the user equipment (UE) (tag device) to overhear the message of the anchor device while a plurality of anchor devices broadcast or exchange messages. The UE performing the DL-TDoA operation may overhear the messages transmitted by the two anchor devices to calculate a Time Difference of Arrival (TDoA) proportional to the difference between the distances between each anchor device and the UE. The UE may calculate a relative distance to the anchor device by using TDoA with several pairs of anchor devices and use it for positioning. The operation of the anchor device for DL-TDoA may be similar to that of Double Side-Two Way Ranging (DS-TWR) defined in IEEE 802.15.4z and may further include other useful time information so that the UE may calculate the TDoA. In the disclosure, DL-TDoA may be referred to as DL-TDoA localization.

"Anchor device" may be referred to as an anchor, a UWB anchor or a UWB anchor device and may be a UWB device deployed in a specific location to provide a positioning service. For example, the anchor device may be a UWB device installed by a service provider on a wall, ceiling, structure, or the like in a room to provide an indoor positioning service. Anchor devices may be divided into initiator anchors and responder anchors according to the order and role of transmitting messages.

"Initiator anchor" may be referred to as an initiator UWB anchor, an initiator anchor device, or the like and may announce the start of a specific ranging round. The initiator anchor may schedule a ranging slot for the responder anchors operating in the same ranging round to respond. The initiation message of the initiator anchor may be referred to as an initiator Downlink TDoA Message (DTM) or Poll message. The initiation message of the initiator anchor may include a transmission timestamp. The initiator anchor may additionally transfer an end message after receiving responses from the responder anchors. The end message of the initiator anchor may be referred to as Final DTM or Final message. The end message may include the time of the reply to the messages sent by the responder anchors. The end message may include a transmission timestamp.

"Responder anchor" may also be referred to as a Responder UWB anchor, a Responder UWB anchor device, a Responder anchor device, etc. The responder anchor may be a UWB anchor responding to the initiation message of the initiator anchor. The message with which the responder anchor responds may include the time of reply to the initiation message. The message with which the responder anchor responds may be referred to as a Responder DTM or a Response message. The response message of the responder anchor may include a transmission timestamp.

"Cluster" may mean a set of UWB anchors covering a specific area. The cluster may be composed of an initiator UWB anchor and responder UWB anchors responding thereto. For 2D positioning, one initiator UWB anchor and at least two responder UWB anchors are typically required and, for 3D positioning, one initiator UWB anchor and at least three responder UWB anchors are required. If the initiator UWB anchor and the responder UWB anchor may be accurately time-synchronized through a separate wired/wireless connection, one initiator UWB anchor and two responder UWB anchors are required for 2D positioning, and one initiator UWB anchor and three responder UWB anchors are required for 3D positioning. Unless otherwise stated, it is assumed that there is no separate device for wired/wireless time synchronization between UWB anchors. The cluster area may be a space formed by the UWB anchors constituting the cluster. To support the positioning service for a wide area, a plurality of clusters may be configured to provide the positioning service to the UE. In this disclosure, a cluster may be referred to as a cell. In the disclosure, the operation of the cluster may be understood as the operation of anchor(s) belonging to the cluster.

"Active ranging round" may be a ranging round operating in an active state. In an active ranging round, anchor devices may exchange DL-TDoA messages, and the tag device (UE) may overhear the message transmitted by the anchor device. In this disclosure, the active ranging round may be referred to as an active round.

"In-active ranging round" may be a ranging round operating in an in-active state or sleep state. In the in-active ranging round, anchor devices do not exchange DL-TDoA messages, and the tag device UE may be in a sleep state. In this disclosure, the in-active ranging round may be referred to as a sleep ranging round, an in-active round, or a sleep round.

"Reference clock" may refer to one common clock that allows the anchors (DT-anchors) and tags (DT-tags) constituting the downlink TDoA system to operate in sync with each other and allows the DT-tag to obtain a correct TDoA value. Since DT-anchors and DT-tags are different terminals and operate with different crystal oscillators, there may be a slight difference in clock speed and, since the power supply time differs, the clock origin may be different. Therefore, a mechanism to maintain the same clock throughout the system is required, which may be called time synchronization. Time synchronization between the components in the cluster may be referred to as intra-cluster synchronization, and the operation in which the plurality of responder anchors constituting one cluster sync with the clock of the initiator anchor of the same cluster may be referred to as intra-cluster synchronization. Synchronizing between adjacent clusters may be referred to as inter-cluster synchronization, and maintaining the same ranging block structure between the initiator anchors of the adjacent clusters may be referred to as inter-cluster synchronization. In the cluster, the clock of the initiator anchor may be a reference clock and, in the entire system, the clock of one specific initiator anchor may be a reference clock.

"Global controller" may be a UWB terminal that may set the order of operation of the DT-anchors constituting the downlink TDoA system, the structure of the cluster, and the reference clock. The global controller may be one of the DT-anchors, and there may be a plurality of global controllers in the same system.

When determined to make the subject matter of the present invention unnecessarily unclear, the detailed description of related known functions or features may be skipped in describing the disclosure.

Hereinafter, various embodiments of the disclosure are described with reference to the accompanying drawings.

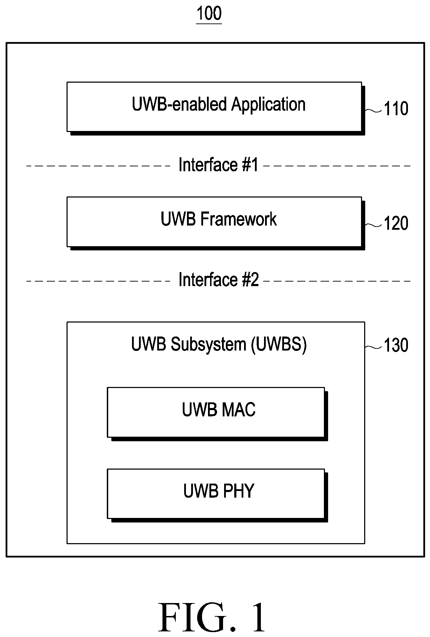

FIG. 1 illustrates an example architecture of a UWB device according to an embodiment of the disclosure;

In the disclosure, the UWB device 100 may be an electronic device supporting UWB communication. The UWB device 100 may be, e.g., a ranging device supporting UWB ranging. In an embodiment, the Ranging Device may be an Enhanced Ranging Device (ERDEV) defined in IEEE 802.15.4z or a FiRa Device defined by FiRa.

In the embodiment of FIG. 1, the UWB device 100 may interact with other UWB devices through a UWB session.

The UWB device 100 may implement a first interface (Interface #1) that is an interface between the UWB-enabled Application 110 and the Framework 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). For example, the UWB-enabled Application 110 may use one of the profiles defined in FiRa or a custom profile. The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

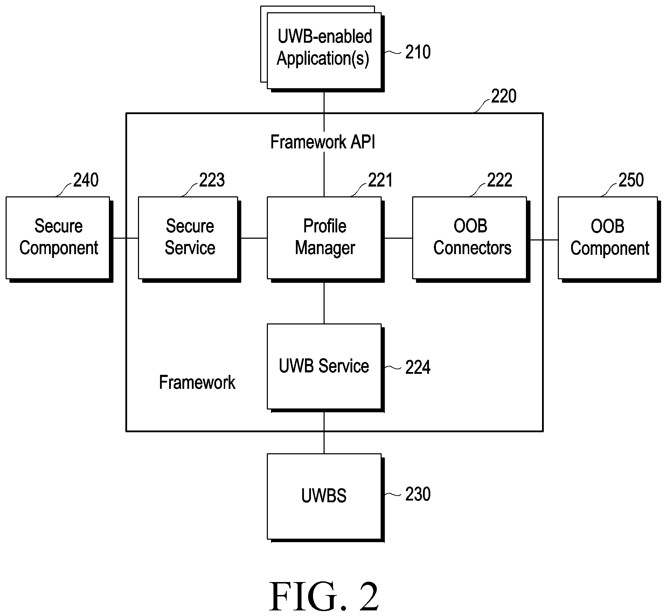

FIG. 2 illustrates an example configuration of a framework of a UWB device according to an embodiment of the disclosure;

The UWB device of FIG. 2 may be an example of the UWB device of FIG. 1.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

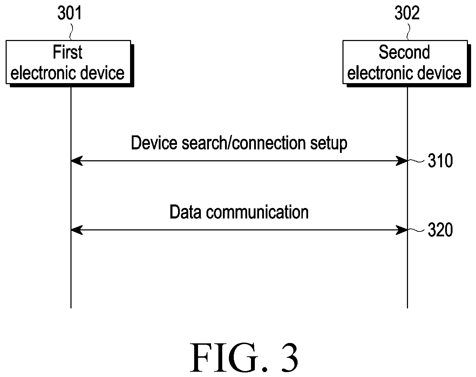

FIG. 3 illustrates a method for performing communication by a plurality of electronic devices according to an embodiment of the disclosure;

The first electronic device 301 and the second electronic device 302 of FIG. 3 may be, e.g., the UWB devices of FIG. 1 or 2.

Referring to FIG. 3, the first electronic device 301 and the second electronic device 302 may perform a device search/connection setup procedure 310 and a data communication procedure 320. The device search/connection setup procedure 310 and data communication procedure 320 may be managed or controlled by the MAC layer (entity) of the electronic device.

(1) Device search/connection setup procedure

In the disclosure, the device search/connection setup procedure 310 may be a prior procedure performed before the data communication procedure 320. As an example, the device discovery/connection setup procedure 310 may be performed over OOB communication (channel), NB communication (channel), and/or UWB communication (channel).

The device search/connection setup procedure 310 may include at least one of the following operations.

- Device discovery operation: An operation in which the electronic device searches for (discovers) another UWB devices. The device discovery operation may include an operation for transmitting/receiving an advertisement message. In the disclosure, the device discovery operation may be referred to as a discovery operation or an advertising operation.
- Connection setup operation: An operation in which two electronic devices establish a connection. The connection setup operation may include an operation for transmitting/receiving a connection request message and a connection confirmation message. A connection (channel) established through the connection setup operation may be used to configure and control a UWB session for data communication. For example, parameters (e.g., UWB performance parameters (controllee performance parameters), UWB configuration parameters, session key-related parameters) for configuring a UWB session through a secure channel established through the connection setup operation may be negotiated between two electronic devices.

(2) Data communication procedure

In the disclosure, the data communication procedure 320 may be a procedure for transmitting and receiving data using UWB communication. As an embodiment, the data communication procedure may be performed by UWB communication or NB communication.

The data communication procedure 320 may include at least one of the following operations.

- UWB ranging operation: An operation in which the electronic device performs UWB ranging with another electronic device in a preset UWB ranging scheme (e.g., OWR, SS-TWR, DS-TWR scheme). As an embodiment, the UWB ranging operation may include a ToF measurement operation and/or an AoA measurement operation.
- Transaction operation: An operation in which an electronic device exchanges service data with another electronic device.

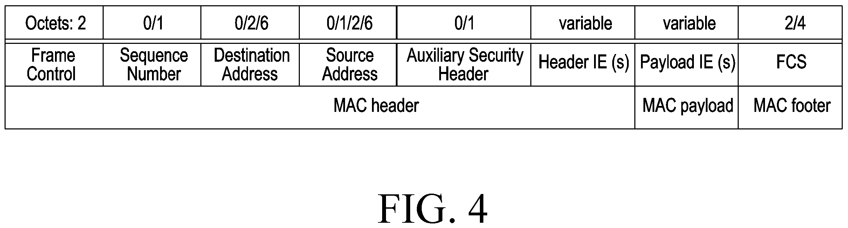

FIG. 4 illustrates a structure of a UWB MAC frame according to an embodiment of the disclosure;

In the embodiment of FIG. 4, the UWB MAC frame may follow the MAC frame structure of IEEE 802.15.4z, for example. In this disclosure, the UWB MAC frame may be simply referred to as a MAC frame or frame. As an embodiment, the UWB MAC frame may be used to transfer UWB data (e.g., UWB message, ranging message, control information, service data, application data, transaction data, etc.).

Referring to FIG. 4, the UWB MAC frame may include a MAC header (MHR), a MAC payload and/or a MAC footer (MFR).

(1) MAC header

The MAC header may include a Frame Control field, a Sequence Number field, a Destination Address field, a Source Address field, an Auxiliary Security Header field, and/or at least one Header IE field. According to an embodiment, some fields may not be included in the MAC header.

As an embodiment, the Frame Control field may include a Frame type field, a Security Enabled field, a Frame Pending field, an AR field, a PAN ID Compression field, a Sequence Number Suppression field, an IE Present field, a Destination Addressing Mode field, a Frame Version field, and/or a Source Addressing Mode field. Each field is described below.

The Frame Type field may indicate the frame type. As an embodiment, the frame type may include a data type and/or a multipurpose type.

The Security Enabled field may indicate whether an Auxiliary Security Header field exists. The Auxiliary Security Header field may include information required for security processing.

The Frame Pending field may indicate whether the device transmitting the frame has more data for the recipient. In other words, the Frame Pending field may indicate whether there is a pending frame for the recipient.

The AR field may indicate whether acknowledgment for frame reception is required from the recipient.

The PAN ID Compression field may indicate whether the PAN ID field exists.

The Sequence Number Suppression field may indicate whether the Sequence Number field exists. The Sequence Number field may indicate the sequence identifier for the frame.

The IE Present field may indicate whether the Header IE field and the Payload IE field are included in the frame.

The Destination Addressing Mode field may indicate whether the Destination Address field may include a short address (e.g., 16 bits) or an extended address (e.g., 64 bits). The Destination Address field may indicate the address of the recipient of the frame.

The Frame Version field may indicate the frame version. For example, the Frame Version field may be set to a value indicating IEEE std 802. 15.4z-2020.

The Source Addressing Mode field may indicate whether the Source Address field exists, and if the Source Address field exists, whether the Source Address field includes a short address (e.g., 16 bits) or an extended address (e.g., 64 bits). The Source Address field may indicate the address of the originator of the frame.

(2) MAC payload

The MAC payload may include at least one Payload IE field. As an embodiment, the Payload IE field may include a Vendor Specific Nested IE. As an embodiment, the Payload IE field may include the Payload IE field of the UWB message, ranging message or control message.

(3) MAC footer

The MAC footer may include an FCS field. The FCS field may include a 16-bit CRC or a 32-bit CRC.

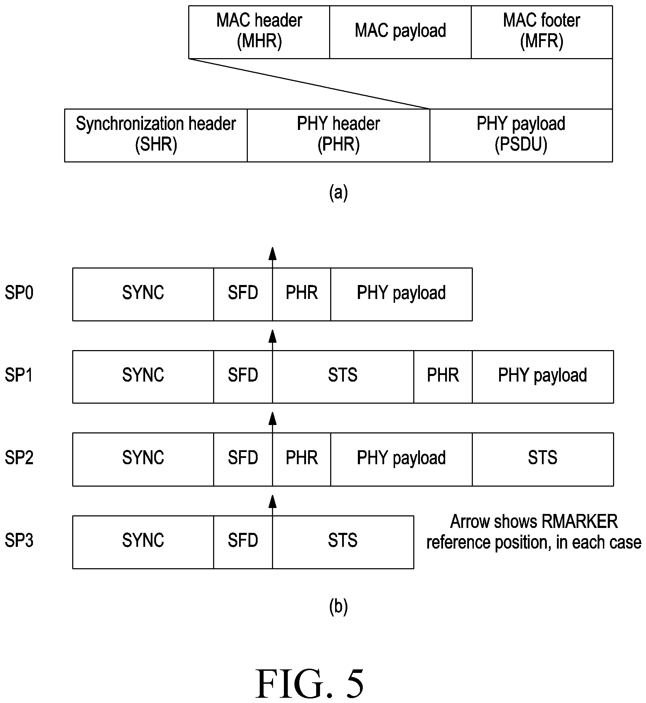

FIGS. 5A and 5B illustrate a structure of a UWB PHY packet according to an embodiment of the disclosure.

FIG. 5A illustrates an example structure of a UWB PHY packet to which the STS packet configuration is not applied, and FIG. 5B illustrates an example structure of a UWB PHY packet to which the STS packet configuration is applied. In the disclosure, the UWB PHY packet may be referred to as a PHY packet, a PHY PDU (PPDU), or a frame.

Referring to FIG. 5A, the PPDU may include a synchronization header (SHR), a PHY header (PHR), and a PHY payload (PSDU). The PSDU may include a MAC frame. As shown in FIG. 4, the MAC frame may include a MAC header (MHR), a MAC payload and/or a MAC footer (MFR). In the disclosure, the synchronization header part may be referred to as a preamble, and the part including the PHY header and the PHY payload may be referred to as a data part.

The synchronization header may be used for synchronization for signal reception and may include a SYNC field and a start-of-frame delimiter (SFD).

The SYNC field may be a field including a plurality of preamble symbols used for synchronization between transmission/reception devices. The preamble symbol may be set through one of previously defined preamble codes.

The SFD field may be a field indicating the end of the SHR and the start of the data field.

The PHY header may provide information about the configuration of the PHY payload. For example, the PHY header may include information about the length of the PSDU, information indicating whether the current frame is an RFRAME, and the like.

Meanwhile, the PHY layer of the UWB device may include an optional mode to provide a reduced on-air time for high density/low power operation. In this case, the UWB PHY packet may include an encrypted sequence (i.e., STS) to increase the integrity and accuracy of the ranging measurement timestamp. An STS may be included in the STS field of the UWB PHY packet and be used for secure ranging.

Referring to FIG. 5B, in the case of STS packet (SP) setting 0 (SP0), the STS field is not included in the PPDU (SP0 packet). In the case of SP setting 1 (SP1), the STS field is positioned immediately after the Start of Frame Delimiter (SFD) field and before the PHR field (SP1 packet). In the case of SP setting 2 (SP2), the STS field is positioned after the PHY payload (SP2 packet). In the case of SP setting 3 (SP3), the STS field is positioned immediately after the SFD field, and the PPDU does not include the PHR and data field (PHY payload) (SP3 packet). In other words, in the case of SP3, the PPDU does not include the PHR and PHY payload.

In the embodiment of FIG. 5B, each UWB PHY packet may include RMARKER for defining a reference time.

RMARKER may be used to obtain the transmission time, reception time and/or time range of the ranging message (frame) in the UWB ranging procedure.

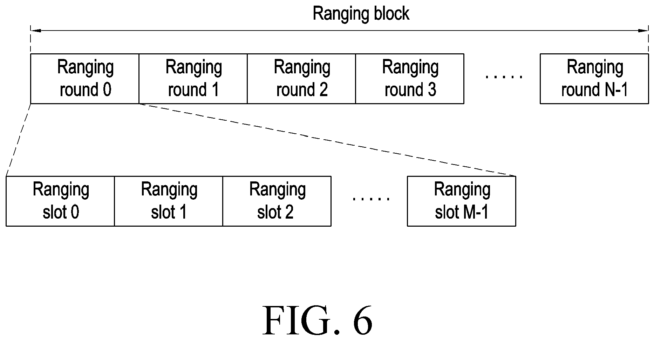

FIG. 6 illustrates an example of a structure of a ranging block and round used for UWB ranging according to an embodiment of the disclosure;

In this disclosure, the ranging block refers to a time period for ranging. The ranging round may be a period of sufficient duration to complete one entire range-measurement cycle (ranging cycle) in which a set of UWB devices participating in a ranging exchange involves. The ranging slot may be a sufficient period for transmission of at least one ranging frame (RFRAME) (e.g., ranging initiation/reply/final message, etc.).

As shown in FIG. 6, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds.

In the disclosure, a ranging block, a ranging round, and a ranging slot may be abbreviated as a block, a round, and a slot.

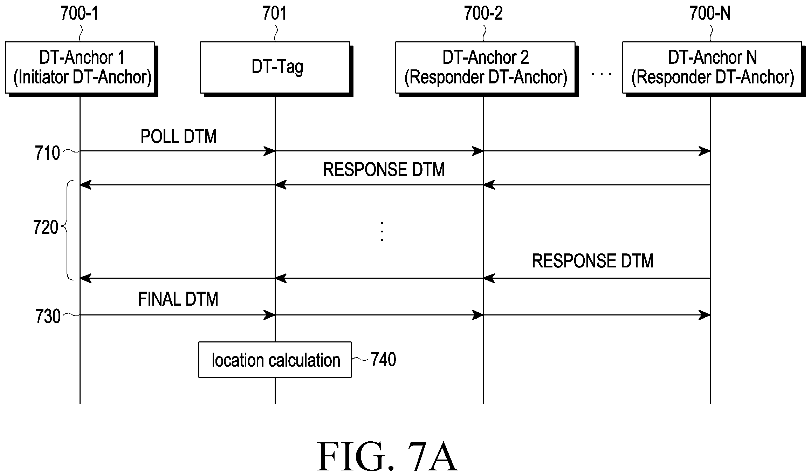

FIG. 7A illustrates schematic operations of a DL-TDoA procedure according to an embodiment of the disclosure.

Referring to FIG. 7A, in operation 710, DT anchor 1 700-1, which is an initiator DL-TDoA (DT) anchor, may initiate a DT procedure by transmitting a poll message (Poll DTM).

In operation 720, DT anchor 2 to DT anchor N 700-2,..., 700-N, which are responder DT anchors, may transmit a response message (responder DTM). As an example, the responder DT anchor may identify whether a response message should be transmitted and/or a ranging slot used for transmitting the response message, based on scheduling information included in the poll message. As an embodiment, the response message may include information about a first response time $\beta$. Here, the first response time may be the time required for the corresponding responder DT anchor to receive the initiation message and transmit a response message corresponding to the initiation message.

In operation 730, DT anchor 1 700-1 may end the DT procedure by transmitting a termination message (final DTM). As an embodiment, the termination message may include information about a second response time $\gamma$. Here, the second response time may be the time required for the initiator DT anchor to receive the response message and transmit the termination message.

As shown in FIG. 7A, the DT tag 701 may receive (or overhear) the initiation message, the response message, and the end message exchanged between DT anchors 700-1,..., 700-N and obtain (find out) a TDoA curve. The DT tag 701 may obtain a TDoA result by repeating the same on the signals received from, e.g., three or more DT anchors.

In operation 740, the DT tag 701 may obtain a relative position to the DT anchor based on the TDoA result.

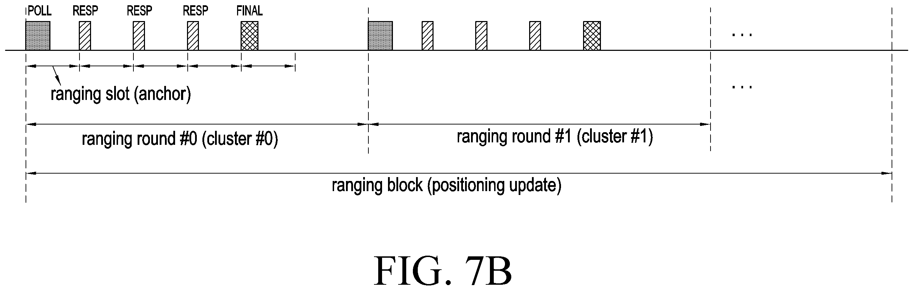

FIG. 7B illustrates an example message exchange operation of a DL-TDoA procedure according to an embodiment of the disclosure.

Referring to FIG. 7B, the ranging block for DL-TDoA may include a plurality of ranging rounds.

As an embodiment, the ranging block may include a plurality of ranging rounds allocated for each cluster. For example, when n clusters are deployed, the ranging blocks may include a first ranging round (ranging round #0) allocated for a first cluster (cluster #0), a second ranging round (ranging round #1) allocated for a second cluster (cluster #1),... and an nth ranging round allocated for an nth cluster. Although not shown in FIG. 7B, according to an embodiment, a plurality of ranging rounds may be allocated to one cluster, or one ranging round may be allocated to a plurality of clusters.

As described above, "cluster" may mean a set of DT anchors (UWB anchors) covering a specific area. The cluster may be composed of an initiator DT anchor and responder DT anchors responding thereto. The cluster area may be a space formed by the UWB anchors constituting the cluster. To support the positioning service for a wide area, a plurality of clusters may be configured to provide the positioning service to the UE. In this disclosure, a cluster may be referred to as a cell. In the disclosure, the operation of the cluster may be understood as the operation of anchor(s) belonging to the cluster.

A ranging round may include a plurality of ranging slots.

In an embodiment, the ranging round may include a plurality of ranging slots allocated for each ranging message transmitted by the UWB anchors belonging to the cluster associated with the ranging round. For example, if one cluster includes one initiator DT anchor and three responder DT anchors as shown in FIG. 7A, the ranging round for the first cluster may include a first ranging slot allocated for transmission/reception of the Poll message of the Initiator DT anchor included in the first cluster, a second ranging slot allocated for transmission/reception of the response message of the first Responder DT anchor, a third ranging slot allocated for transmission/reception of the response message of the second Responder DT anchor, a fourth ranging slot allocated for transmission/reception of the response message of the third Responder DT anchor, and a fifth ranging slot allocated for transmission/reception of the final message of the Initiator DT anchor. As an embodiment, a period other than the duration during which an associated ranging message is transmitted in the corresponding ranging slot may be a sleep period.

In this scheme, ranging slots may be allocated to the ranging round for each cluster.

Through the ranging block structure as in the embodiment of FIG. 7B, each cluster may exchange its own ranging messages (e.g., Poll/Response/Final message) once in a ranging block, and the DT tag (UE) may receive these ranging messages and calculate its location. Such an operation may be repeated for each ranging block. Thus, the location of the UE may be updated in the period of the ranging block in the corresponding cluster. Accordingly, in the embodiment of FIG. 7B, the ranging block may correspond to a period for positioning update.

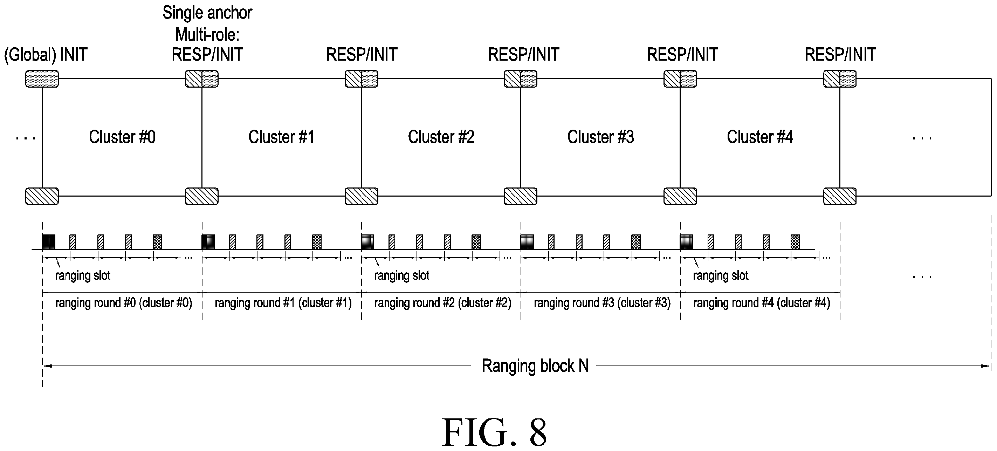

FIG. 8 is a view schematically illustrating a method for configuring a multi-cluster chain for time synchronization according to an embodiment of the disclosure.

The embodiment of FIG. 8 may be an example of a multi-cluster chain configuration for time synchronization.

Referring to FIG. 8, ranging block N may include a plurality of ranging rounds. Among the plurality of ranging rounds, ranging round #0 may be allocated for cluster #0. ranging round #1 for cluster #1, ranging round #2 for cluster #2, ranging round #3 for cluster #3, and ranging round #4 for cluster #4.

As an embodiment, the initiator of cluster #0 associated with the first ranging round (ranging round #0) of ranging block N may transmit scheduling information. As an embodiment, the initiator of cluster #0 may act as a global initiator.

Each anchor receiving the scheduling information may identify its operation time and role based on the scheduling information. Thus, the anchors may perform message exchange operations (e.g., the operation of exchanging the poll message, response message, and/or final message) for DL-TDoA according to their respective roles in the corresponding ranging round.

Referring to FIG. 8, operations of anchors in each cluster are described below.

<Operations of anchors in cluster #0>

The initiator of cluster #0 may transmit the poll message including scheduling information.

The remaining anchors in cluster #0 may receive the poll message from the initiator and identify that their roles are responders based on the scheduling information included in the poll message. Further, one anchor of cluster #0 may identify that it plays multiple roles.

Each responder may transmit a response message corresponding to the poll message to the initiator in the ranging slot allocated for itself. As an embodiment, information about the ranging slot allocated to each responder may be included in the poll message. For example, information about the ranging slot allocated to each responder may be included in the ranging device management list field included in the poll message.

The initiator may transmit a final message corresponding to the response message from the responders.

Meanwhile, one of the responders of cluster #0 may play multiple roles. For example, one of the responders in cluster #0 acts as a responder in the current ranging round (ranging round #0), but may act as an initiator in the next ranging round (ranging round #1). Ranging (DL-TDoA) in the next ranging round may be initiated by the responder playing the multiple roles.

<Operations of anchors in cluster #1>

The initiator of cluster #1 may send the poll message. As described above, the initiator of cluster #1 is a multi-role anchor and plays a role as a responder in ranging round #0 (previous ranging round) of cluster #0. As an embodiment, the poll message may include scheduling information.

The remaining anchors (responders) of cluster #1 may receive the poll message from the initiator and transmit a response message corresponding to the poll message to the initiator in the ranging slot allocated thereto. As an embodiment, information about the ranging slot allocated to each responder may be included in the poll message.

The initiator may transmit a final message corresponding to the response message from the responders.

Meanwhile, one of the responders of cluster #1 may play multiple roles. For example, one of the responders in cluster #1 acts as a responder in the current ranging round (ranging round #1), but may act as an initiator in the next ranging round (ranging round #2). Ranging (DL-TDoA) in the next ranging round may be initiated by the responder playing the multiple roles.

<Operations in the remaining clusters>

In the remaining clusters, similar to the operation in cluster #1, each anchor may perform a message exchange operation for DL-TDoA ranging according to its operation time and role indicated by scheduling information.

The multi-cluster configuration of the embodiment of FIG. 8 corresponds to a multi-cluster chain configuration. Thus, one anchor in a cluster is configured to perform multiple roles. Through the multi-cluster chain configuration, intra-cluster time synchronization and inter-cluster time synchronization are possible.

<Intra-cluster synchronization>

Intra-cluster synchronization may be time synchronization between anchors in one cluster. As an embodiment, intra-cluster synchronization may include an operation for synchronizing the responders belonging to one cluster to the clock of the initiator belonging to the same cluster. For example, when a CFO-based time synchronization scheme is applied, the responders may obtain (or calculate) a CFO based on the initiator's poll message and perform time synchronization between the initiator and responders using the CFO. As an embodiment, the poll message may include CFO information.

<Inter-cluster synchronization>

Inter-cluster synchronization may be time synchronization between adjacent clusters. As an embodiment, inter-cluster synchronization may include an operation for maintaining the same ranging block structure between adjacent clusters. When the multi-cluster configuration is the same as the multi-cluster chain configuration of FIG. 8, the anchor operating as a responder of the current cluster operates as the initiator of the next cluster due to the chain configuration of the clusters, so that the above-described intra-cluster time synchronization method may be extended to the inter-cluster time synchronization method. In other words, inter-cluster time synchronization may be performed by extending the intra-cluster time synchronization method based on the poll message without separate message exchange for time synchronization between the initiators of the clusters.

Meanwhile, when performing a DL-TDoA procedure, 1) a permanent or temporary non-line-of-sight (NLOS) context may occur between anchors, or 2) a context may occur where the message reception rate between anchors is reduced.

For example, permanent NLOS may occur during a DL-TDoA procedure depending on an anchor installation/attachment context and/or anchor H/W constraints (e.g., signal radiation angle). For example, temporary NLOS may occur during a DL-TDoA procedure due to a moving object passing between anchors or a temporary obstacle occurring.

For example, a decrease in message reception rate between anchors may occur in the event of non-reception of a DL-TDoA message between anchors due to anchor H/W and S/W reasons, temporary power supply problems, and/or deterioration of radio channel condition between anchors. For example, if the responder anchor does not receive an initiation message, the responder anchor may not send a response message, which may cause problems in the cluster chain. For example, if the responder anchor sends a response message but the initiator anchor does not receive it, a problem may occur in the cluster chain.

However, at least the problem due to deterioration of the radio channel condition between anchors may be prevented in advance. The disclosure proposes a method for optimizing the cluster configuration to prevent the problem.

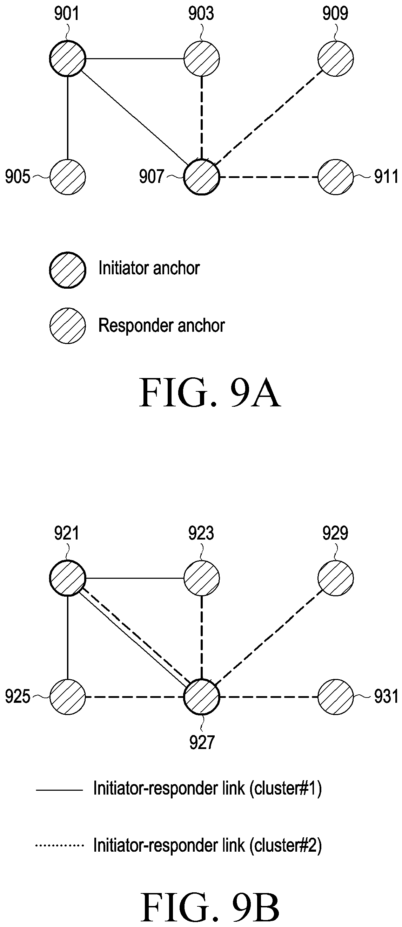

FIG. 9A illustrates an example of a cluster configuration according to an embodiment of the disclosure.

Referring to FIG. 9A, a first initiator anchor 901, a first responder anchor 903, a second responder anchor 905, and a third responder anchor 907 may configure a first cluster. The third responder anchor 907 in the first cluster may operate as a second initiator anchor 907 in a second cluster. The second initiator anchor 907, the first responder anchor 903, the fourth responder anchor 909, and the fifth responder anchor 911 may configure the second cluster. However, the embodiment is not limited thereto, and the number of clusters may vary, and the number of anchors included in each cluster may also vary.

According to an embodiment, all of the anchors within an effective transmission/reception distance from the initiator anchor may potentially become responder anchors. According to an embodiment, clusters may be configured in various ways for spatial reuse for time resources (e.g., ranging rounds) in a DL-TDoA system.

FIG. 9B illustrates another example of a cluster configuration according to an embodiment of the disclosure.

Referring to FIG. 9B, a first initiator anchor 921, a first responder anchor 923, a second responder anchor 925, and a third responder anchor 927 may configure a first cluster. The third responder anchor 927 in the first cluster may operate as a second initiator anchor 927 in a second cluster, and the first initiator anchor 921 in the first cluster may operate as a sixth responder anchor 921 in the second cluster.

The second initiator anchor 927, the first responder anchor 923, the second responder anchor 925, the fourth responder anchor 929, the fifth responder anchor 931, and the sixth responder anchor 921 may configure the second cluster. However, the embodiment is not limited thereto, and the number of clusters may vary, and the number of anchors included in each cluster may also vary.

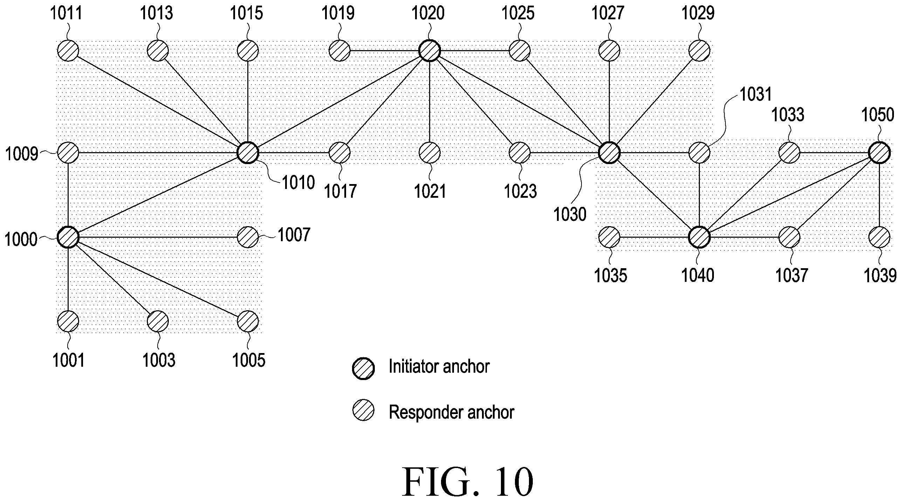

FIG. 10 illustrates an example graph defining a connection between an initiator anchor and a responder anchor according to an embodiment of the disclosure.

According to an embodiment, the UWB device, the server, and/or the electronic device may define a connection between a plurality of initiator anchors and a plurality of responder anchors, and may configure a plurality of clusters.

Referring to FIG. 10, a first initiator anchor 1000 and a plurality of responder anchors 1001, 1003, 1005, 1007, 1009, and 1010 may configure a first cluster, and a second initiator anchor 1010 and a plurality of responder anchors 1007, 1009, 1011, 1013, 1015, 1017, and 1020 may configure a second cluster.

A third initiator anchor 1020 and a plurality of responder anchors 1017, 1019, 1021, 1023, 1025, and 1030 may configure a third cluster, and a fourth initiator anchor 1030 and a plurality of responder anchors 1020, 1023, 1025, 1027, 1029, 1031, and 1040 may configure a fourth cluster. A fifth initiator anchor 1040 and a plurality of responder anchors 1030, 1031, 1033, 1035, 1037, and 1050 may configure a fifth cluster, and a sixth initiator anchor 1050 and a plurality of responder anchors 1033, 1037, 1039, 1039, and 1040 may configure a sixth cluster.

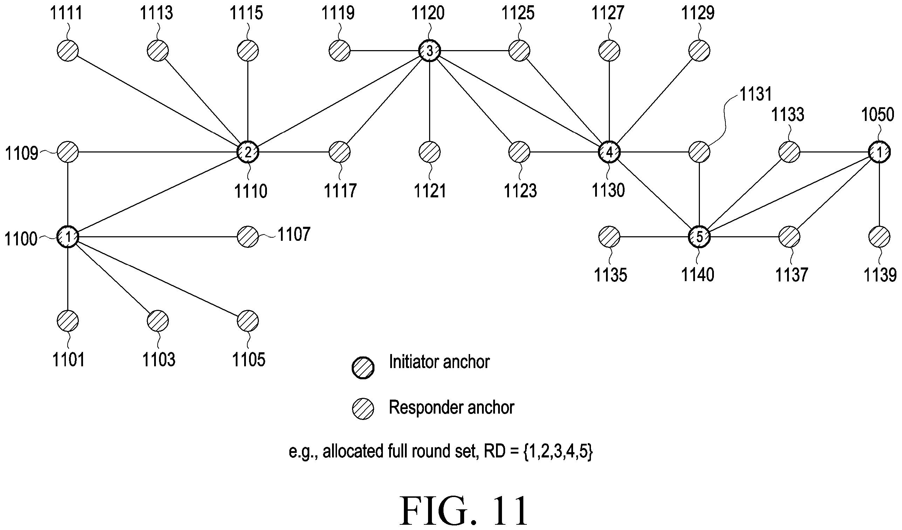

FIG. 11 illustrates an example of allocating a round to a configured cluster according to an embodiment of the disclosure.

Referring to FIGS. 10 and 11, the UWB device, the server, and/or the electronic device may allocate a ranging round to each of the clusters configured in FIG. 10.

Referring to FIG. 11, a first ranging round may be allocated to a first cluster including a first initiator anchor 1100, a second ranging round may be allocated to a second cluster including a second initiator anchor 1110, a third ranging round may be allocated to a third cluster including a third initiator anchor 1120, a fourth ranging round may be allocated to a fourth cluster including a fourth initiator anchor 1130, and a fifth ranging round may be allocated to a fifth cluster including a fifth initiator anchor 1140. According to an embodiment, the first ranging round may be allocated to the sixth cluster including the sixth initiator anchor 1150 like the first cluster.

However, embodiments are not limited thereto, and ranging rounds allocated to each of the clusters may be set in various ways.

According to an embodiment, the UWB device, the server, and/or the electronic device may determine (or identify) whether an NLOS context occurs between the first anchor and the second anchor based on at least two pieces of data.

According to an embodiment, the UWB device, the server, and/or the electronic device may compare a first value corresponding to a TWR between anchors with a second value corresponding to a distance between anchors calculated through a site survey and, if an absolute value of the difference between the first value and the second value is larger than or equal to a preset threshold, may determine that an NLOS context occurs between anchors. For example, when the second value exceeds the first value by a predetermined ratio, the UWB device, the server, and/or the electronic device may determine that an NLOS context occurs between anchors.

According to another embodiment, when performing TWR between anchors for a predetermined time (e.g., 10 minutes), if the message reception rate for each link is lower than a predetermined threshold, the UWB device, the server, and/or the electronic device may estimate that the radio channel condition between the anchors is not good.

According to another embodiment, the UWB device, the server, and/or the electronic device may estimate that the radio channel condition between the anchors is not good based on the RSSI values of the anchors.

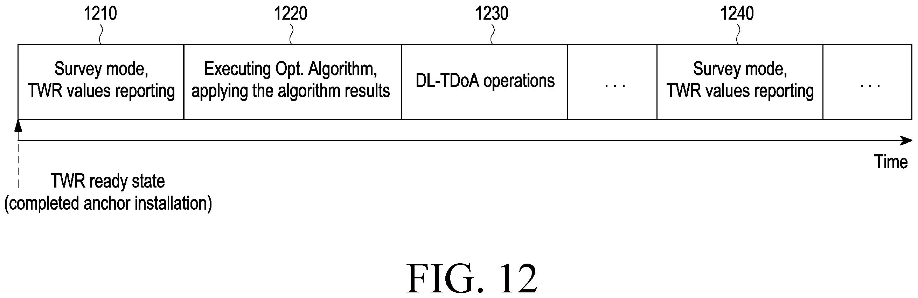

FIG. 12 illustrates an example sequence in which an optimization algorithm is performed in a time domain according to an embodiment of the disclosure.

Referring to FIG. 12, in a TWR ready state (completed anchor installation), a survey mode 1210 for reporting a TWR value may be performed, an optimization algorithm execution 1220 may be performed, and then a DL-TDoA operation 1230 may be performed. According to an embodiment, after the DL-TDoA operation 1230, the survey mode 1240 for reporting the TWR value may be performed again.

According to an embodiment, each of the survey mode 1210, the optimization algorithm execution 1220, the DL-TDoA operation 1230, and the survey mode 1240 may be performed in at least one ranging block (or a plurality of ranging slots).

According to an embodiment, at least one of the survey mode 1210, the optimization algorithm execution 1220, and the survey mode 1240 may be performed at night time or network operator's initiation. According to an embodiment, the DL-TDoA operation 1230 may be performed during a day time.

In the survey modes 1210 and 1240 for reporting the TWR value, a contention-based TWR (one-to-many mode) between anchors installed at designated positions may be repeatedly performed.

Specific operations of the anchors in the survey modes 1210 and 1240 for reporting the TWR value are as follows.

<Survey mode for TWR value reporting>

1) Installed anchors enter TWR survey mode
2) Each anchor, as an initiator anchor, broadcasts group poll messages (GPM)
3) Anchor receiving GPM transmits RRM as responder anchor
4) Initiator anchor calculates the TWR value between the initiator anchor and the responder anchor based on the received RRM
5) Obtains the average TWR value between anchors by repeating the above-described for a predetermined duration

Specific operations of the UWB device, the anchor, and/or the electronic device for optimization algorithm execution 1220 are as follows.

<Optimization algorithm>

1) Configures a plurality of clusters for anchors to minimize occurrence of NLOS
2) Allocates a ranging round to each cluster considering the minimum distance between anchors to minimize interference between the plurality of clusters

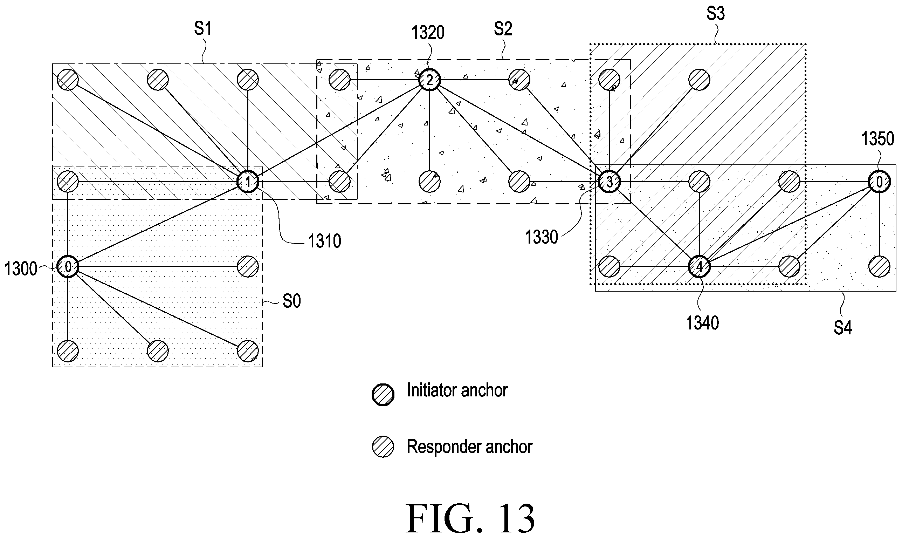

FIG. 13 illustrates an example process in which a TWR is performed between anchors installed at designated positions according to an embodiment of the disclosure.

If a total of N anchors are present in the entire positioning target space S and N is very large, it is very inefficient to perform TWR for all (N-1)X(N-1) pairs and, considering the slot count limit for each ranging round, TWR for all (N-1)X(N-1) pairs may be impossible.

Referring to FIG. 13, if the entire positioning target space S is divided into L sub-spaces si, it may be expressed as $S = \{s_0, s_1, \cdots, S_{L-1}\}$. For example, in FIG. 13, the entire positioning target space S may be divided into five sub-spaces S0, S1, S2, S3, and S4.

In FIG. 13, a first sub-space $S_0$ may include a first initiator anchor 1300, a second sub-space $S_1$ may include a second initiator anchor 1310, a third sub-space $S_2$ may include a third initiator anchor 1320, a fourth sub-space $S_3$ may include a fourth initiator anchor 1330, and a fifth sub-space $S_4$ may include a fifth initiator anchor 1350.

According to an embodiment, the UWB device, the server, and/or the electronic device may configure a temporal anchor set for survey with a predetermined (b-1)X(b-1) pairs in a predetermined number (e.g., b) anchors.

According to an embodiment, the UWB device, the server, and/or the electronic device may configure a V matrix by collecting only TWR values between immediately adjacent anchors (anchors close enough to actually perform TWR) by performing TWR L times, for all of L (5 in FIG. 13) sub-spaces. According to an embodiment, the V matrix may refer to a matrix including a binary indicator $v_{ij}$ indicating whether there is a link between anchors considering an effective positioning space and an effective moving path.

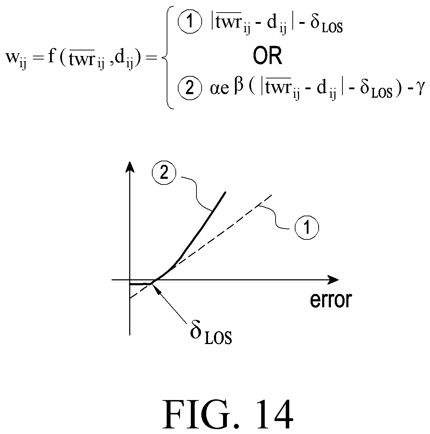

FIG. 14 illustrates an example of determining whether an NLOS context occurs between anchors according to an embodiment of the disclosure.

In FIG. 14, the UWB device, server, and/or electronic device may compare a first value corresponding to the TWR between anchors with a second value corresponding to the distance between the anchors, calculated through site survey, and determine whether an NLOS context occurs between the anchors based on the comparison result.

When a total of N anchors are present in the entire target space S, a set of anchors may be expressed as $\mathbf{A} := \{a_1, a_2, \cdots, a_N\}$, $|\mathbf{A}| = N$.

Referring to FIG. 14, the weight factor of NLOS between the ith anchor and the jth anchor is expressed as $w_{ij}$, where wij may be determined based on the measured distance $d_{ij}$ between the ith anchor and the jth anchor and the average TWR value $\overline{twr}_{ij}$ between the ith anchor and the jth anchor.

In FIG. 14, the weight factor wij of NLOS may be determined based on a function $f(\overline{twr}_{ij}, d_{ij})$ between the measured distance dij between the ith anchor and the jth anchor and the average TWR value $\overline{twr}_{ij}$ between the ith anchor and the jth anchor.

According to an embodiment, the function $f(\overline{twr}_{ij}, d_{ij})$ is a linear function and may be implemented in the form of $|\overline{twr}_{ij} - d_{ij}| - \delta_{LOS}$ based on a coefficient $\delta_{LOS}$ regarding LOS.

According to another embodiment, the function $f(\overline{twr}_{ij}, d_{ij})$ is an exponential function and may be implemented in the form of $\alpha e^{\beta(|\overline{twr}_{ij}-d_{ij}|-\delta_{LOS})} - \gamma$ based on a first coefficient $\alpha$, a second coefficient $\beta$, a third coefficient $\gamma$, and the coefficient $\delta_{LOS}$ regarding LOS.

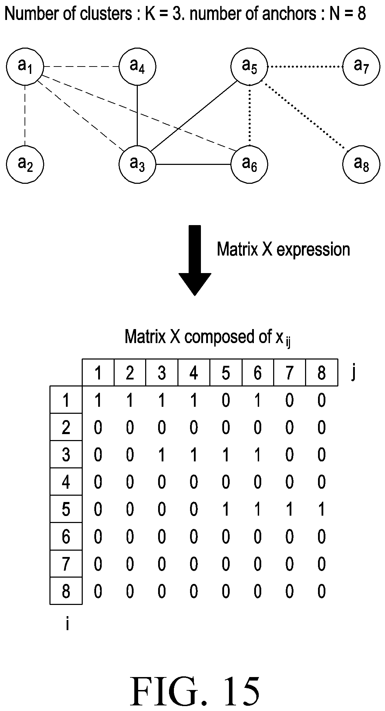

FIG. 15 illustrates an example of a matrix indicating whether anchors belong to the same cluster according to an embodiment of the disclosure.

Referring to FIG. 15, a first initiator anchor a1 and a plurality of responder anchors a2, a3, a4, and a6 may configure a first cluster, and one responder anchor a3 in the first cluster may serve as an initiator anchor in the second cluster. A second initiator anchor a3 and a plurality of responder anchors a4, a5, and a6 may configure a second cluster, and one responder anchor a5 in the second cluster may serve as an initiator anchor in a third cluster. A third initiator anchor a5 and a plurality of responder anchors a6, a7, and a8 may configure the third cluster.

FIG. 15 illustrates an example in which the number of clusters is 3 (K=3) and the number of anchors is 8 (N=8), and a matrix X $(x_{ij})$ indicating whether the ith anchor and the jth anchor of FIG. 15 belong to the same cluster may be configured.

For example, the first cluster including the first initiator anchor a1 and the plurality of responder anchors a2, a3, a4, and a6 may be expressed as $\{x_{11}=1, x_{12}=1, x_{13}=1, x_{14}=1, x_{15}=0, x_{16}=1, x_{17}=0, x_{18}=0\}$ in the matrix X.

For example, the second cluster including the second initiator anchor a3 and the plurality of responder anchors a4, a5, and a6 may be expressed as $\{x_{31}=0, x_{32}=0, x_{33}=1, x_{34}=1, x_{35}=1, x_{36}=1, x_{37}=0, x_{38}=0\}$ in the matrix X.

For example, the third cluster including the third initiator anchor a5 and the plurality of responder anchors a6, a7, and a8 may be expressed as $\{x_{51}=0, x_{52}=0, x_{53}=01, x_{54}=0, x_{55}=1, x_{56}=1, x_{57}=1, x_{58}=1\}$ in the matrix X.

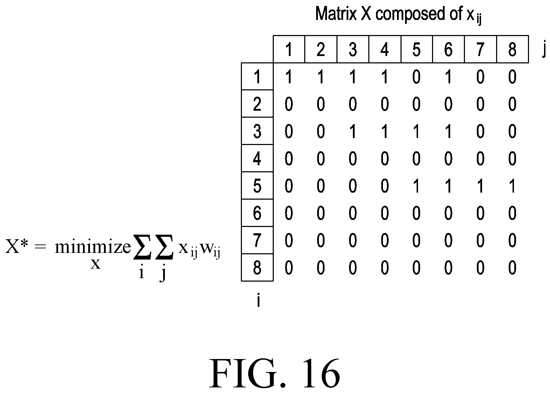

FIG. 16 illustrates an example of configuring a cluster so that a sum operation of a matrix X ($x_{ij}$) indicating whether an ith anchor and a jth anchor belong to the same cluster and a weight factor $w_{ij}$ of NLOS between the ith anchor and the jth anchors is minimized, according to an embodiment of the disclosure.

According to a first embodiment, a cluster may be configured so that the sum operation of the weight factors $w_{ij}$ of NLOS between the anchors is minimized considering the following limitations.

<Cluster configuration restriction conditions according to the first embodiment>

1) Limit to the number of responder anchors per cluster: $(n_{min} \leq n \leq n_{max})$ $n_{min} = 2$, $n_{max}$ < Number of slots allocable in single ranging round
Only the effective link between anchors considering the effective positioning space and the effective moving path should be considered.
2) All anchors should belong to at least one cluster
3) K-1 initiator anchors except the global initiator anchor should operate as responder anchors in clusters other than the cluster where they are initiator anchors
4) The area of each cluster should be equal to or larger than the minimum area limit value (limiting the case where the anchor in the cluster is placed on the same straight line, etc.)

Referring to FIG. 16, according to the first embodiment, X* may be derived so that the sum operation of the matrix X ($x_{ij}$) indicating whether the ith anchor and the jth anchor belong to the same cluster and the weight factor $w_{ij}$ of NLOS between the ith anchor and the jth anchor is minimized.

For convenience of description, it is assumed that the matrix X ($x_{ij}$) is configured in the same manner as in FIG. 15.

<Cluster configuration restriction conditions according to the first embodiment> may be expressed as Equations C1 to C7 as follows.

$$C1: x_{ij} \in \{0,1\}, \forall i,j$$

Referring to C1, each element of matrix X ($x_{ij}$) may be configured as 0 or 1. For example, $x_{ij} = 0$ may indicate that the ith anchor and the jth anchor do not belong to the same cluster. For example, $x_{ij} = 1$ may indicate that the ith anchor and the jth anchor belong to the same cluster.

$$C2: \sum_i x_{ii} = K$$

Referring to C2, the number of clusters may be K. For example, if $x_{ii} = 1$, the ith anchor may be an initiator anchor in the corresponding cluster.

$$C3: x_{ij}(v_{ij} - 1) \geq 0, \forall i,j$$

Referring to C3, the matrix V ($v_{ij}$) indicating whether there is a link between the ith anchor and the jth anchor and the matrix X ($x_{ij}$) indicating whether the ith anchor and the jth anchor belong to the same cluster should be considered together. For example, when there is a link between the ith anchor and the jth anchor ($v_{ij}$ =1) and the ith anchor and the jth anchor belong to the same cluster ($x_{ij}$ =1), C3 may be met.

$$C4: \sum_j x_{ij} = 0, \text{ where } x_{ii} = 0, \ n_{\min} \leq \sum_j x_{ij} \leq n_{\max}, \text{ where } x_{ii} = 1$$

Referring to C4 above, if the ith anchor is not the initiator anchor in the cluster ($x_{ii}=0$), $\sum_j x_{ij} = 0$ should be met and, if the ith anchor is the initiator anchor in the cluster ($x_{ii}=1$), a per-cluster responder anchor count limit $n_{min} \leq n \leq n_{max}$ may be set.

$$C5: \sum_i x_{ij} \geq 1, \forall j$$

Referring to C5, all of the jth anchors are initiator anchors or responder anchors in each cluster. In other words, all of the anchors should belong to at least one cluster.

$$C6: \sum_i x_{ii} \min\left(1, \sum_{j,j\neq i} x_{ji}\right) = K - 1$$

Referring to C6, K-1 initiator anchors other than the global initiator anchor should operate as responder anchors in clusters other than the cluster in which they are initiator anchors.

$$C7: S_i \geq S_{\min}, \text{ if } x_{ii} = 1$$

Referring to C7, the area $S_i$ of each cluster should be equal to or larger than the minimum area limit value $S_{\min}$.
According to a second embodiment, the cluster may be configured so that the sum of weights allocated to anchor pairs in the cluster is minimized considering the following limitations. According to an embodiment, the weight between two anchors may increase as the difference between the actual distance and the TWR value increases.

<Cluster configuration restriction conditions according to the second embodiment>

1) Limit to the number of anchors in the cluster: ($n_{\min} \leq n \leq n_{max}$)
2) It may belong to the same cluster only if TWR between anchors is measurable
3) All anchors should belong to at least one cluster
4) Initiators except the global initiator should operate as responders in at least one other cluster
5) The area of the polygon formed by considering the anchors belonging to each cluster as vertices should be larger than a predetermined value.
6) Every point within the target area should be covered by at least one cluster.

According to the second embodiment, X* which allows the sum operation of the matrix X ($x_{ij}$) indicating whether the ith anchor and the jth anchor belong to the same cluster and the weight factor $w_{ij}$ of NLOS between the ith anchor and the jth anchor to be minimized may be derived based on Equation 1.

[Equation 1]

$$X^* = \underset{X}{\text{minimize}} \sum_{i=1}^{N} \sum_{j=1}^{N} x_{i,j} w_{i,j} \sum_{k=j+1}^{N} x_{i,k} \frac{w_{j,k}}{\gamma} \quad \text{where } w_{i,j} := f\left(\overline{twr}_{i,j}, d_{i,j}\right) \\ \gamma: \text{discount factor}$$

<Cluster configuration restriction conditions according to the second embodiment> may be expressed as Equations C1 to C7 as follows.

$$C1: x_{ij} \in \{0,1\}, \forall i,j$$

Referring to C1, each element of matrix X ($x_{ij}$) may be configured as 0 or 1. For example, $x_{ij} = 0$ may indicate that the ith anchor and the jth anchor do not belong to the same cluster. For example, $x_{ij} = 1$ may indicate that the ith anchor and the jth anchor belong to the same cluster.

$$C2: \sum_j x_{i,j} = 0, \text{ if } x_{i,i} = 0, \forall i \\ n_{\min} \leq \sum_j x_{ij} \leq n_{\max}, \text{ if if } x_{i,i} = 1, \forall i$$

Referring to C2 above, the number of anchors in the cluster may be limited ($n_{\min} \leq n \leq n_{max}$).

$$C3: x_{ij}\left(v_{ij} - 1\right) \geq 0, \forall i, j$$

Referring to C3, the matrix V ($v_{ij}$) indicating whether there is a link between the ith anchor and the jth anchor and the matrix X ($x_{ij}$) indicating whether the ith anchor and the jth anchor belong to the same cluster should be considered together.

$$C4: \sum_i x_{i,j} \geq 1, \forall j$$

Referring to C4, all of the anchors should be included in at least one cluster.

$$C5: \sum_i x_{i,i} = K$$
$$i_G = i \text{ s.t. } x_{i,i} \sum_j^{\square} x_{i,j} = 1$$
$$\mathcal{J} = \{i | x_{i,i} = 1\} - \{i_G\}$$
$$\sum_{i \in \mathcal{J}} \mathcal{B}(i_G, i) = K - 1 \text{ where } \mathcal{B}(i,j) = \begin{cases} 1, & \text{if } \exists A, \ldots, B \in \mathcal{J} \text{ s.t. } x_{i,A} \cdots x_{B,j} = 1 \\ 0, & \text{otherwise} \end{cases}$$

Referring to C5, the initiators except the global initiator should operate as responders in at least one other cluster.

$$C6: S_i \geq S_{\min}, \text{ if } x_{i,i} = 1, \forall i$$

Referring to C6, the area of a polygon configured by considering the anchors belonging to each cluster as the vertices should be equal to or larger than the minimum area limit value $S_{\min}$.

$$C7: \cup S_i \geq \eta \cdot S_{\text{total}}, \forall i$$

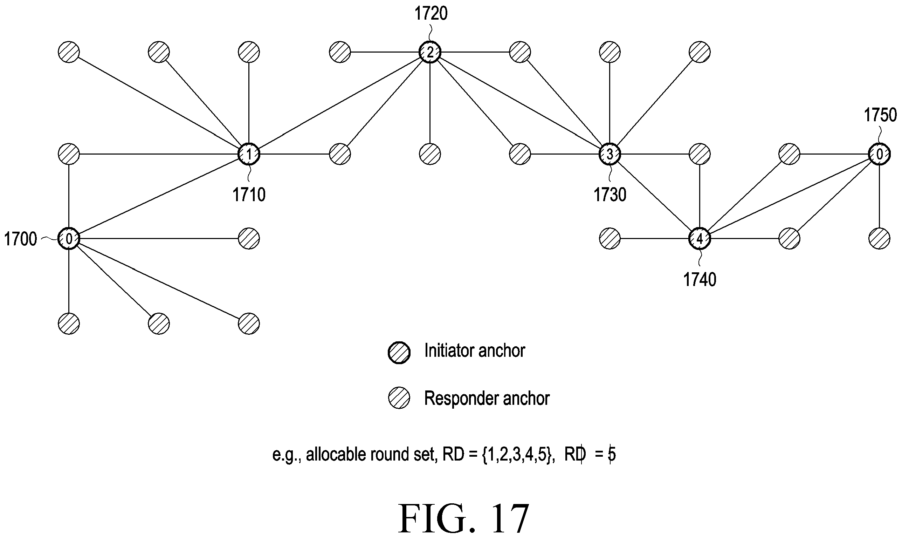

Referring to C7, every point within the target area should be covered by at least one cluster. FIG. 17 illustrates an example of allocating a round to each of clusters according to an embodiment of the disclosure.

To minimize interference between clusters, a single ranging round may be allocated to each cluster. In this case, the minimum distance $d_{th}$ between the initiator anchors of different clusters (spatial reuse) to which the same ranging round is allocated should be met, and the maximum value M of the total number of ranging rounds allocated should be met.

Referring to FIG. 17, a first ranging round may be allocated to a first cluster including a first initiator anchor 1700, a second ranging round may be allocated to a second cluster including a second initiator anchor 1710, a third ranging round may be allocated to a third cluster including a third initiator anchor 1720, a fourth ranging round may be allocated to a fourth cluster including a fourth initiator anchor 1730, and a fifth ranging round may be allocated to a fifth cluster including a fifth initiator anchor 1740. According to an embodiment, the first ranging round may be allocated to the sixth cluster including the sixth initiator anchor 1750 like the first cluster (spatial reuse).

According to an embodiment, a distance between initiator anchors 1700 and 1750 of different clusters to which the same first ranging round is allocated may be equal to or larger than the minimum distance $d_{th}$.

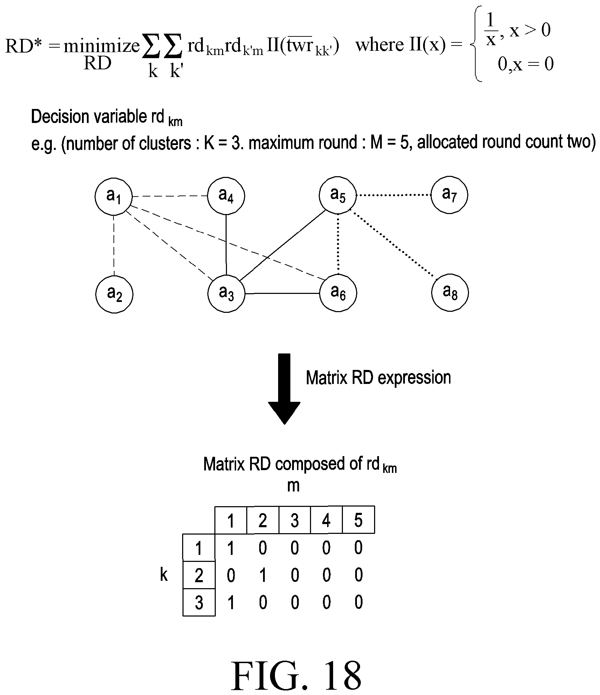

FIG. 18 illustrates an example of a matrix indicating a round allocated to each of clusters according to an embodiment of the disclosure.

Referring to FIG. 18, according to the first embodiment, RD may be a matrix including $rd_{km}$, which is a binary indicator indicating whether an mth round is allocated to a kth cluster. According to an embodiment, the UWB device, the server, and/or the electronic device may configure the matrix RD according to the equation shown in FIG. 18.

Referring to FIG. 18, a first initiator anchor a1 and a plurality of responder anchors a2, a3, a4, and a6 may configure a first cluster, and one responder anchor a3 in the first cluster may serve as an initiator anchor in the second cluster. A second initiator anchor a3 and a plurality of responder anchors a4, a5, and a6 may configure a second cluster, and one responder anchor a5 in the second cluster may serve as an initiator anchor in a third cluster. A third initiator anchor a5 and a plurality of responder anchors a6, a7, and a8 may configure the third cluster.

In FIG. 18, when the number of clusters is 3 (K=3), the maximum number of rounds is 5 (M=5), and the number of allocated rounds is 2, the matrix RD ($rd_{km}$) according to the first embodiment may be configured.

For example, if a first round is allocated to a first cluster including the first initiator anchor a1 and the plurality of responder anchors a2, a3, a4, and a6, it may be expressed as $rd_{11}$=1 in the matrix RD, if a second round is allocated to a second cluster including the second initiator anchor a3 and the plurality of responder anchors a4, a5, and a6, it may be expressed as $rd_{22}$=1 in the matrix RD, and if a first round is allocated to a third cluster including the third initiator anchor a5 and the plurality of responder anchors a6, a7, and a8, it may be expressed as $rd_{31}$=1 in the matrix RD.

<Restriction conditions when allocating mth round to kth cluster according to the first embodiment> may be expressed as Equations C1 to C3 as follows.

$$C1: \sum_m rd_{km} = 1, \forall k$$

Referring to C1, a single round may be allocated to each cluster.

$$C2: d_{kk'} \geq d_{th} \text{ if } rd_{km} = 1 \text{ and } rd_{k'm} = 1$$

Referring to C2, a minimum distance between initiator anchors in different clusters to which the same round is allocated may be set to $d_{th}$.

$$C3: \sum_m \min(1, \sum_k rd_{km}) \leq M$$

Referring to C3, the maximum value of the total number of allocable rounds may be set to M.

According to the second embodiment, Y may be a matrix including $y_{im}$, which is a binary indicator indicating whether an mth ranging round is allocated to a cluster in which an ith anchor is an initiator. According to an embodiment, the UWB device, the server, and/or the electronic device may configure the matrix Y according to Equation 2.

[Equation 2]

$$Y^* = \underset{Y}{\text{minimize}} \sum_{m=1}^{M} \sum_{i=1}^{N-1} \sum_{i'=i+1}^{N} y_{i,m} y_{i',m} \mathbb{I}(\overline{twr}_{i,i'}) \quad \text{where } \mathbb{I}(x) = \begin{cases} \frac{1}{x}, x > 0 \\ 0, x = 0 \end{cases}$$

In Equation 2, N may be the total number of anchors, and M may be the total number of ranging rounds.

<Restriction conditions when allocating mth round to the cluster in which the ith anchor is an initiator according to the second embodiment> may be expressed as Equations C1 and C2 as follows.

$$C1: y_{i,m} \in \{0,1\}, \forall i, m$$

Referring to C1, $y_{im}$ may be configured as 0 or 1.

$$C2: \sum_{m=1}^{M} y_{i,m} = 1, \text{ if } x_{i,i} = 1, \forall i$$

Referring to C2, if the ith anchor is an initiator, a ranging round may be allocated.

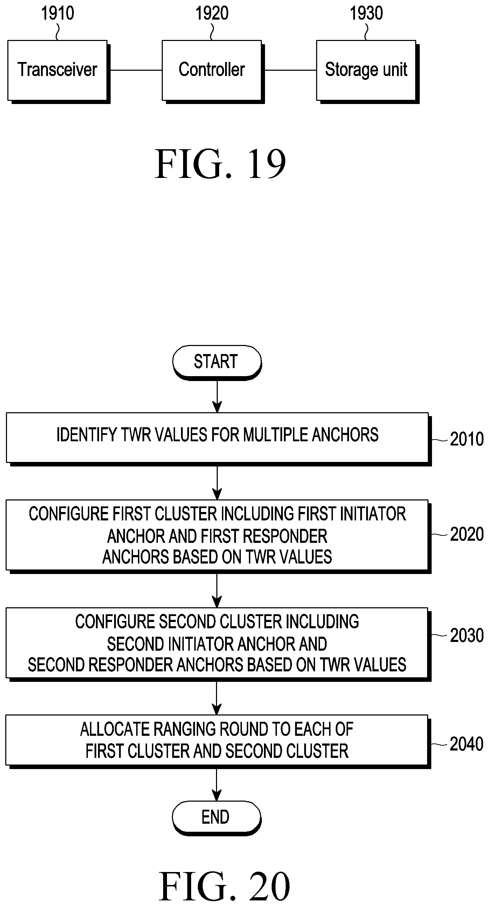

FIG. 19 is a block diagram illustrating an electronic device according to an embodiment of the disclosure.

In the embodiment of FIG. 19, the electronic device may be a UWB device or a server device communicating with a UWB device.

Referring to FIG. 19, the electronic device may include a transceiver 1910, a controller 1920, and a storage unit 1930. In the disclosure, the controller may be defined as a circuit or application-specific integrated circuit or at least one processor.

The transceiver 1910 may transmit and receive signals to/from another entity. The transceiver 1910 may transmit/receive data to/from another UWB device through, e.g., NB communication, UWB communication or OOB communication (e.g., BLE communication).

The controller 1920 may control the overall operation of the electronic device according to an embodiment. For example, the controller 1920 may control the signal flow between the blocks to perform the operations described in connection with FIGS. 1 to 18. Specifically, the controller 1920 may identify two-way ranging (TWR) values for a plurality of anchors, configure a first cluster including a first initiator anchor and first responder anchors based on the TWR values, configure a second cluster including a second initiator anchor and second responder anchors based on the TWR values, and allocate a ranging round to each of the first cluster and the second cluster.

The storage unit 1930 may store at least one of information transmitted/received via the transceiver 1910 and information generated via the controller 1920. For example, the storage unit 1930 may store information and data necessary for the methods described above with reference to FIGS. 1 to 18, e.g., spatial reuse of time resources.

FIG. 20 is a flowchart illustrating an operation method of an electronic device according to an embodiment of the disclosure.

Referring to FIG. 20, in step 2010, the electronic device may identify two-way ranging (TWR) values for a plurality of anchors. According to an embodiment, the electronic device may be implemented as a UWB device or a server device.

In step 2020, the electronic device may configure a first cluster including a first initiator anchor and first responder anchors based on the TWR values. According to an embodiment, the first initiator anchor included in the first cluster may be a global initiator controlling spatial reuse for the DL-TDoA infrastructure.

In step 2030, the electronic device may configure a second cluster including a second initiator anchor and second responder anchors based on the TWR values. According to an embodiment, the second initiator anchor included in the second cluster may be one of the first responder anchors included in the first cluster.

In step 2040, the electronic device may allocate a ranging round to each of the first cluster and the second cluster.

According to an embodiment, the electronic device may identify a first value corresponding to the average TWR between the first anchor and the second anchor and identify a second value corresponding to the distance between the first anchor and the second anchor. According to an embodiment, the electronic device may determine whether non-line-of-sight (NLOS) occurs between the first anchor and the second anchor based on the first value and the second value.

According to an embodiment, if non-line-of-sight (NLOS) is determined to occur between the first anchor and the second anchor, the electronic device may determine that the link between the first anchor and the second anchor is ineffective.

According to an embodiment, the electronic device may configure a third cluster including a third initiator anchor and third responder anchors based on the TWR values. The third initiator anchor included in the third cluster may be one of the second responder anchors included in the second cluster.

According to an embodiment, the electronic device may identify whether the distance between the first initiator anchor and the third initiator anchor is equal to or larger than a minimum distance. According to an embodiment, the electronic device may identify the number of clusters in the entire positioning space and the number of allocable ranging rounds.

According to an embodiment, if the distance between the first initiator anchor and the third initiator anchor is larger than or equal to the minimum distance and the number of clusters in the entire positioning space is larger than the number of allocable rounds, the electronic device may allocate the same ranging round to the first initiator anchor and the third initiator anchor.

According to an embodiment, the area of each of the first cluster to the third cluster may be equal to or larger than a minimum area value. According to an embodiment, the number of responder anchors included in each of the first cluster to the third cluster may be limited by the number of slots allocable in one ranging round.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1. A method for operating an electronic device, the method comprising:

   identifying two-way ranging (TWR) values for a plurality of anchors;
   configuring a first cluster including a first initiator anchor and first responder anchors based on the TWR values;
   configuring a second cluster including a second initiator anchor and second responder anchors based on the TWR values; and
   allocating a ranging round to each of the first cluster and the second cluster.

2. The method of claim 1, further comprising:

identifying a first value corresponding to an average TWR between the first anchor and the second anchor;
identifying a second value corresponding to a distance between the first anchor and the second anchor; and
determining whether a non-line-of-sight (NLOS) occurs between the first anchor and the second anchor based on the first value and the second value.

3. The method of claim 2, further comprising determining that a link between the first anchor and the second anchor is ineffective based on determining that the non-line-of-sight (NLOS) occurs between the first anchor and the second anchor.

4. The method of claim 1, wherein the second initiator anchor included in the second cluster is one of the first responder anchors included in the first cluster.

5. The method of claim 1, wherein the first initiator anchor included in the first cluster is a global initiator anchor controlling spatial reuse of a DL-TDoA infrastructure.

6. The method of claim 1, further comprising configuring a third cluster including a third initiator anchor and third responder anchors based on the TWR values,
wherein the third initiator anchor included in the third cluster is one of the second responder anchors included in the second cluster.

7. The method of claim 6, further comprising:

identifying whether the distance between the first initiator anchor and the third initiator anchor is larger than or equal to a minimum distance;
identifying a number of clusters in an entire positioning space and a number of allocable ranging rounds; and
allocating the same ranging round to the first initiator anchor and the third initiator anchor if the distance between the first initiator anchor and the third initiator anchor is larger than or equal to the minimum distance and the number of clusters in the entire positioning space is larger than the number of allocable rounds.

8. The method of claim 6, wherein an area of each of the first cluster to the third cluster is equal to or larger than a minimum area value.

9. The method of claim 6, wherein a number of responder anchors included in each of the first cluster to the third cluster is limited by a number of slots allocable in one ranging round.

10. The method of claim 1, wherein the electronic device is a UWB device or a server device.

11. An electronic device, comprising:

a transceiver; and
a processor:

identifying two-way ranging (TWR) values for a plurality of anchors;
configuring a first cluster including a first initiator anchor and first responder anchors based on the TWR values;
configuring a second cluster including a second initiator anchor and second responder anchors based on the TWR values; and
allocating a ranging round to each of the first cluster and the second cluster.

12. The electronic device of claim 11, wherein the processor:

identifies a first value corresponding to an average TWR between the first anchor and the second anchor;
identifies a second value corresponding to a distance between the first anchor and the second anchor; and
determines whether a non-line-of-sight (NLOS) occurs between the first anchor and the second anchor based on the first value and the second value.

13. The electronic device of claim 12, wherein the processor determines that a link between the first anchor and the second anchor is ineffective based on determining that the non-line-of-sight (NLOS) occurs between the first anchor and the second anchor.

14. The electronic device of claim 11, wherein the second initiator anchor included in the second cluster is one of the first responder anchors included in the first cluster.

15. The electronic device of claim 11, wherein the first initiator anchor included in the first cluster is a global initiator anchor controlling spatial reuse of a DL-TDoA infrastructure.

100

UWB-enabled Application ~110

— — — — — — — Interface #1 — — — — — — — —

UWB Framework ~120

— — — — — — — Interface #2 — — — — — — — —

UWB Subsystem (UWBS) ~130

UWB MAC

UWB PHY

# FIG. 1

FIG. 2

EP 4 492 835 A1

First
electronic device

Second
electronic device

Device search/connection setup

Data communication

EP 4 492 835 A1

FIG. 3

| Octets: 2 | 0/1 | 0/2/6 | 0/1/2/6 | 0/1 | variable | variable | 2/4 |
|---|---|---|---|---|---|---|---|
| Frame Control | Sequence Number | Destination Address | Source Address | Auxiliary Security Header | Header IE (s) | Payload IE (s) | FCS |
| MAC header | | | | | | MAC payload | MAC footer |

# FIG. 4

| MAC header (MHR) | MAC payload | MAC footer (MFR) |
|---|---|---|

| Synchronization header (SHR) | PHY header (PHR) | PHY payload (PSDU) |
|---|---|---|

(a)

| | | | | | |
|---|---|---|---|---|---|
| SP0 | SYNC | SFD | PHR | PHY payload | |

| | | | | | |
|---|---|---|---|---|---|
| SP1 | SYNC | SFD | STS | PHR | PHY payload |

| | | | | | |
|---|---|---|---|---|---|
| SP2 | SYNC | SFD | PHR | PHY payload | STS |

| | | | |
|---|---|---|---|
| SP3 | SYNC | SFD | STS |

Arrow shows RMARKER reference position, in each case

(b)

# FIG. 5

Ranging block

| Ranging round 0 | Ranging round 1 | Ranging round 2 | Ranging round 3 | . . . . . | Ranging round N-1 |

| Ranging slot 0 | Ranging slot 1 | Ranging slot 2 | . . . . . | Ranging slot M-1 |

FIG. 6

EP 4 492 835 A1

700-1 | 701 | 700-2 | 700-N

| DT-Anchor 1 (Initiator DT-Anchor) | DT-Tag | DT-Anchor 2 (Responder DT-Anchor) | · · · | DT-Anchor N (Responder DT-Anchor) |

710 — POLL DTM

720 — RESPONSE DTM

⋮

RESPONSE DTM

730 — FINAL DTM

location calculation — 740

## FIG. 7A

EP 4 492 835 A1

POLL   RESP   RESP   RESP   FINAL

ranging slot (anchor)

ranging round #0 (cluster #0)

ranging round #1 (cluster #1)

ranging block (positioning update)

# FIG. 7B

**Single anchor**
**Multi-role:**

(Global) INIT | RESP/INIT | RESP/INIT | RESP/INIT | RESP/INIT | RESP/INIT

· · · Cluster #0 | Cluster #1 | Cluster #2 | Cluster #3 | Cluster #4 · · ·

ranging slot | ranging slot | ranging slot

ranging round #0 (cluster #0) | ranging round #1 (cluster #1) | ranging round #2 (cluster #2) | ranging round #3 (cluster #3) | ranging round #4 (cluster #4)

Ranging block N

FIG. 8

Initiator anchor

Responder anchor

FIG. 9A

——— Initiator-responder link (cluster#1)

·········· Initiator-responder link (cluster#2)

FIG. 9B

FIG. 10

EP 4 492 835 A1

e.g., allocated full round set, RD = {1,2,3,4,5}

FIG. 11

EP 4 492 835 A1

| 1210 | 1220 | 1230 | | 1240 | |
|---|---|---|---|---|---|
| Survey mode, TWR values reporting | Executing Opt. Algorithm, applying the algorithm results | DL-TDoA operations | . . . | Survey mode, TWR values reporting | . . . |

TWR ready state
(completed anchor installation)

Time

EP 4 492 835 A1

## FIG. 12

EP 4 492 835 A1

Initiator anchor

Responder anchor

FIG. 13

$$w_{ij} = f(\overline{twr}_{ij}, d_{ij}) = \begin{cases} \text{①} \quad |\overline{twr}_{ij} - d_{ij}| - \delta_{LOS} \\ \qquad \textbf{OR} \\ \text{②} \quad \alpha e^{\beta(|\overline{twr}_{ij} - d_{ij}| - \delta_{LOS}) - \gamma} \end{cases}$$

FIG. 14

Number of clusters : K = 3. number of anchors : N = 8

Matrix X expression

Matrix X composed of $x_{ij}$

| | 1 | 2 | 3 | 4 | 5 | 6 | 7 | 8 | j |
|---|---|---|---|---|---|---|---|---|---|
| 1 | 1 | 1 | 1 | 1 | 0 | 1 | 0 | 0 | |
| 2 | 0 | 0 | 0 | 0 | 0 | 0 | 0 | 0 | |
| 3 | 0 | 0 | 1 | 1 | 1 | 1 | 0 | 0 | |
| 4 | 0 | 0 | 0 | 0 | 0 | 0 | 0 | 0 | |
| 5 | 0 | 0 | 0 | 0 | 1 | 1 | 1 | 1 | |
| 6 | 0 | 0 | 0 | 0 | 0 | 0 | 0 | 0 | |
| 7 | 0 | 0 | 0 | 0 | 0 | 0 | 0 | 0 | |
| 8 | 0 | 0 | 0 | 0 | 0 | 0 | 0 | 0 | |

i

# FIG. 15

Matrix X composed of $x_{ij}$

|   | 1 | 2 | 3 | 4 | 5 | 6 | 7 | 8 | j |
|---|---|---|---|---|---|---|---|---|---|
| 1 | 1 | 1 | 1 | 1 | 0 | 1 | 0 | 0 | |
| 2 | 0 | 0 | 0 | 0 | 0 | 0 | 0 | 0 | |
| 3 | 0 | 0 | 1 | 1 | 1 | 1 | 0 | 0 | |
| 4 | 0 | 0 | 0 | 0 | 0 | 0 | 0 | 0 | |
| 5 | 0 | 0 | 0 | 0 | 1 | 1 | 1 | 1 | |
| 6 | 0 | 0 | 0 | 0 | 0 | 0 | 0 | 0 | |
| 7 | 0 | 0 | 0 | 0 | 0 | 0 | 0 | 0 | |
| 8 | 0 | 0 | 0 | 0 | 0 | 0 | 0 | 0 | |

i

$$X^* = \underset{X}{\text{minimize}} \sum_i \sum_j x_{ij} w_{ij}$$

# FIG. 16

e.g., allocable round set, RD = {1,2,3,4,5}, RD = 5

FIG. 17

EP 4 492 835 A1

$$RD^* = \underset{RD}{minimize} \sum_{k} \sum_{k'} rd_{km} rd_{k'm} \, II(\overline{twr}_{kk'}) \quad \text{where } II(x) = \begin{cases} \dfrac{1}{x}, x > 0 \\ 0, x = 0 \end{cases}$$

Decision variable $rd_{km}$

e.g. (number of clusters : K = 3. maximum round : M = 5, allocated round count two)

Matrix RD expression

Matrix RD composed of $rd_{km}$

|   |   | 1 | 2 | 3 | 4 | 5 |
|---|---|---|---|---|---|---|
|   |   |   |   | m |   |   |
|   | 1 | 1 | 0 | 0 | 0 | 0 |
| k | 2 | 0 | 1 | 0 | 0 | 0 |
|   | 3 | 1 | 0 | 0 | 0 | 0 |

# FIG. 18

1910        1920        1930

| Transceiver | — | Controller | — | Storage unit |

# FIG. 19

START

IDENTIFY TWR VALUES FOR MULTIPLE ANCHORS — 2010

CONFIGURE FIRST CLUSTER INCLUDING FIRST INITIATOR ANCHOR AND FIRST RESPONDER ANCHORS BASED ON TWR VALUES — 2020

CONFIGURE SECOND CLUSTER INCLUDING SECOND INITIATOR ANCHOR AND SECOND RESPONDER ANCHORS BASED ON TWR VALUES — 2030

ALLOCATE RANGING ROUND TO EACH OF FIRST CLUSTER AND SECOND CLUSTER — 2040

END

# FIG. 20

<table>
<tr><td colspan="2">**INTERNATIONAL SEARCH REPORT**</td><td>International application No.<br><br>**PCT/KR2023/006511**</td></tr>
</table>

**A.    CLASSIFICATION OF SUBJECT MATTER**

**H04W 4/80**(2018.01)i; **H04W 8/00**(2009.01)i; **H04W 84/18**(2009.01)i; **G01S 5/02**(2010.01)i

According to International Patent Classification (IPC) or to both national classification and IPC

**B.    FIELDS SEARCHED**

Minimum documentation searched (classification system followed by classification symbols)

H04W 4/80(2018.01); G01S 13/74(2006.01); G01S 5/00(2006.01); G01S 5/02(2010.01); H04L 12/28(2006.01); H04W 16/18(2009.01); H04W 40/04(2009.01); H04W 40/32(2009.01); H04W 84/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TWR, 클러스터(cluster), 앵커(anchor), 레인징(ranging)

**C.    DOCUMENTS CONSIDERED TO BE RELEVANT**

| Category* | Citation of document, with indication, where appropriate, of the relevant passages | Relevant to claim No. |
|---|---|---|
| Y | WO 2022-027137 A1 (GEONAVO POSITIONING SYSTEMS, INC.) 10 February 2022 (2022-02-10)<br>        See paragraph [0038]; and clams 1-17. | 1,4,10-11,14 |
| A | | 2-3,5-9,12-13,15 |
| Y | KR 10-0972081 B1 (KT CORPORATION) 22 July 2010 (2010-07-22)<br>        See paragraphs [0067]-[0075]; claims 1-5 and 7-24; and figures 4-5. | 1,4,10-11,14 |
| Y | KR 10-2009-0061372 A (KT CORPORATION) 16 June 2009 (2009-06-16)<br>        See paragraphs [0030]-[0046]; and claims 1-9. | 4,14 |
| A | CN 112261665 A (TIANJIN JINHANG INSTITUTE OF COMPUTING TECHNOLOGY) 22 January 2021 (2021-01-22)<br>        See paragraphs [0004]-[0037]; and claims 1-8. | 1-15 |

☑ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **31 July 2023** | **01 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/006511**

| C. | DOCUMENTS CONSIDERED TO BE RELEVANT | |
|---|---|---|
| Category* | Citation of document, with indication, where appropriate, of the relevant passages | Relevant to claim No. |
| A | CN 105954744 B (UNIVERSITY OF SCIENCE & TECHNOLOGY BEIJING) 27 July 2018 (2018-07-27)<br>See paragraphs [0005]-[0046]; and claims 1-2. | 1-15 |

Form PCT/ISA/210 (second sheet) (July 2022)

**INTERNATIONAL SEARCH REPORT**
Information on patent family members

| International application No. |
| --- |
| **PCT/KR2023/006511** |

| Patent document cited in search report | | | Publication date (day/month/year) | Patent family member(s) | | | Publication date (day/month/year) |
| --- | --- | --- | --- | --- | --- | --- | --- |
| WO | 2022-027137 | A1 | 10 February 2022 | AU | 2021-322835 | A1 | 10 February 2022 |
| | | | | CA | 3187865 | A1 | 10 February 2022 |
| | | | | EP | 4193168 | A1 | 14 June 2023 |
| KR | 10-0972081 | B1 | 22 July 2010 | CN | 101730226 | A | 09 June 2010 |
| | | | | CN | 101730226 | B | 25 December 2013 |
| | | | | US | 2010-0074133 | A1 | 25 March 2010 |
| | | | | US | 8248963 | B2 | 21 August 2012 |
| KR | 10-2009-0061372 | A | 16 June 2009 | | None | | |
| CN | 112261665 | A | 22 January 2021 | CN | 112261665 | B | 14 October 2022 |
| CN | 105954744 | B | 27 July 2018 | CN | 105954744 | A | 21 September 2016 |

Form PCT/ISA/210 (patent family annex) (July 2022)